# EUROPÄISCHE PATENTSCHRIFT

(11) **EP 1 688 074 B1**
(45) Veröffentlichungstag und Bekanntmachung des Hinweises auf die Patenterteilung: **19.03.2008**
(21) Anmeldenummer: 06405040.4
(22) Anmeldetag: 30.01.2006
(51) Int. Cl.: A47J 31/44

(54) **Anordnung zur Erzeugung von Milchschaum und zum Erhitzen von Milch**
Device for frothing and for heating milk
Dispositif pour produire de la mousse de lait et pour chauffer le lait

(30) Priorität: 08.02.2005 CH 1942005
(43) Veröffentlichungstag der Anmeldung: 09.08.2006
(73) Patentinhaber: Saeco IPR Limited, Dublin 12 (IE)
(72) Erfinder: Frigeri, Patrizio, CH-8610 Uster (CH)
(74) Vertreter: Rottmann, Maximilian

(56) Entgegenhaltungen:
- DE-A1- 19 955 195
- US-A- 6 006 654

## Beschreibung

Die Erfindung bezieht sich auf eine gemäss dem Oberbegriff des Anspruchs 1 ausgebildete Anordnung zur Erzeugung von Milchschaum und zum Erhitzen von Milch.

Zur Erzeugung von Milchschaum sind sogenannte Milchschäumer oder Emulgiereinrichtungen in unterschiedlichen Ausführungsformen bekannt. Diese Milchschäumer bzw. Emulgiereinrichtungen verfügen im allgemeinen über einen Dampfzufuhrkanal, der in eine Saugkammer mündet. Die Saugkammer ihrerseits ist mit einem Milchzufuhrkanal und einem Luftzufuhrkanal verbunden. Durch den Dampfstrom wird in der Saugkammer ein Unterdruck erzeugt, welcher bewirkt, dass Milch über den Milchzufuhrkanal und Luft über den Luftzufuhrkanal in die Saugkammer gesaugt werden. Das erzeugte Dampf-Luft-Milchgemisch wird in einer nachfolgenden Emulgierkammer in eine turbulente Strömung versetzt, so dass ein homogener Milchschaum entsteht. Der mit dem Milchschäumer erzeugte Milchschaum kann beispielsweise für die Herstellung von Cappuccino oder Latte Macchiato verwendet werden. Mit einem Milchschäumer kann neben der Herstellung von Milchschaum im allgemeinen auch Milch erhitzt werden, wobei in diesem Fall die Luftzufuhr unterbrochen wird.

Aus der EP 0 195 750 ist eine Emulgiereinrichtung genannte Anordnung zur Erzeugung von Milchschaum bekannt. Diese weist einen Düsenkörper auf, der mit einer Dampferzeuger verbunden wird. Der Düsenkörper ist in einen rohrförmigen Körper eingesetzt, der tangential in eine zylindrische Emulgierkammer mündet. Die Emulgierkammer ist auf der Unterseite mit einer Abgabeöffnung versehen. Im Innern des rohrförmigen Körpers wird eine Saugkammer gebildet, in welche auf der Oberseite ein Lufteinlasskanal und auf der Unterseite ein Milcheinlasskanal mündet. Beim Zuführen von Dampf entsteht in der Saugkammer ein Unterdruck, der das Ansaugen von Milch und Luft bewirkt. Das Gemisch aus Wasser, Dampf, Luft und Milch wird tangential in die Emulgierkammer eingeleitet, in der es in eine turbulente Strömung versetzt wird, welche den Emulgiervorgang fördern und die Kondensation des Dampfes bewirken soll. Über die Abgabeöffnung tritt die erzeugte Emulsion aus der Vorrichtung aus.

Eine weitere Anordnung ist aus der DE 19955195 A bekannt.

Die Erfindung zielt darauf ab, eine Anordnung zur Erzeugung von Milchschaum und zum Erhitzen von Milch derart weiterzubilden, dass sie einfach aufgebaut ist, und dass die sich nach dem Erzeugen von Milchschaum oder dem Erhitzen von Milch noch in der Schäumvorrichtung befindliche Milch schnell abfliessen kann.

Hierzu wird nach der Erfindung eine Anordnung gemäss dem Anspruch 1 bereitgestellt.

Bevorzugte Ausführungsbeispiele der Vorrichtung sind in den abhängigen Ansprüchen 2 bis 20 umschrieben.

Nachfolgend wird ein Ausführungsbeispiel der Erfindung anhand von Zeichnungen näher erläutert. Dabei zeigt:
Fig. 1 die Anordnung zur Erzeugung von Milchschaum und zum Erhitzen von Milch in einer Explosionsdarstellung;
Fig. 2 einen Längsschnitt durch die Anordnung gemäss Fig. 1 in zusammengebautem Zustand, und
Fig. 3 einen Querschnitt durch die Ventilanordnung gemäss Fig. 2.

Die Anordnung zur Erzeugung von Milchschaum und zum Erhitzen von Milch ist gesamthaft mit dem Bezugszeichen 1 versehen. Die Anordnung 1 umfasst im wesentlichen eine Schäumvorrichtung 2, einen Milchbehälter 3, ein Kupplungselement 4 sowie eine Ventilanordnung 5. Im weiteren ist ein Deckel 3a zum Verschliessen des Milchbehälters 3 ersichtlich.

Die Schäumvorrichtung 2 weist einen Unterteil 6 und einen Oberteil 7 auf, welche beiden Teile 5, 7 mittels einer Steckverbindung miteinander fixierbar sind. Im weiteren ist ein von oben in den Oberteil 7 einsetzbarer Ventileinsatz 8 ersichtlich, der anschliessend noch näher erläutert wird. Der Milchbehälter 3 ist mit einer Vertiefung 10 versehen, die in einer schlitzförmigen Ausnehmung 11 mündet. Die Schäumvorrichtung 2 ihrerseits ist mit einem nutförmigen Schlitz 12 versehen, mittels welchem sie in der Ausnehmung 11 des Milchbehälters 3 fixiert werden kann.

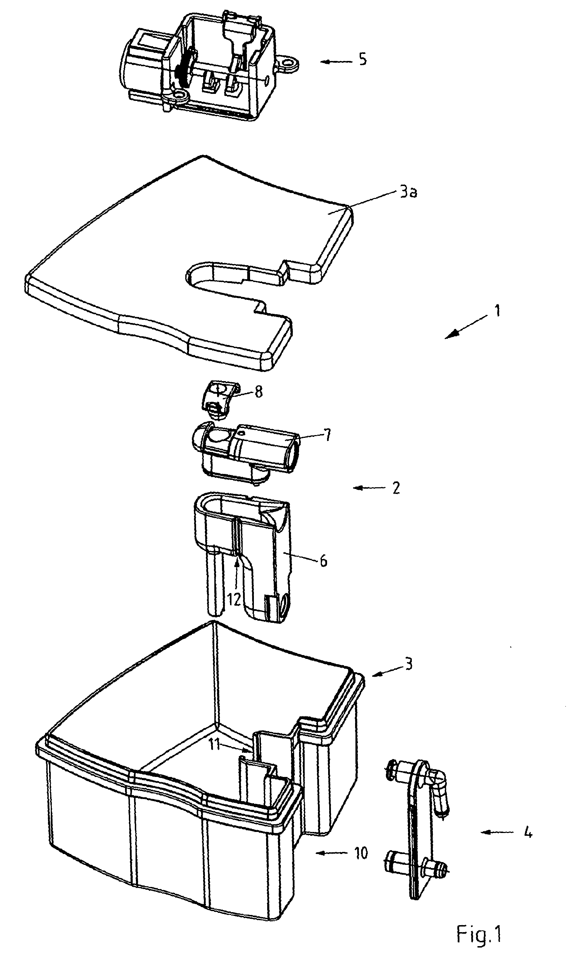

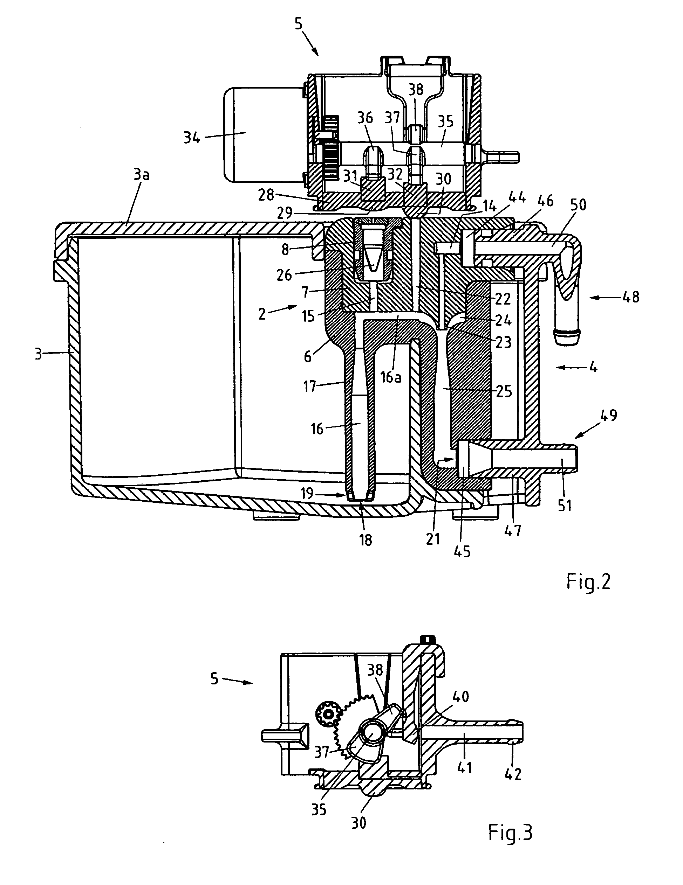

Aus der Fig. 2 ist die Anordnung gemäss Fig. 1 im zusammengebauten Zustand in einem Längsschnitt ersichtlich. Der Unterteil 6 der Schäumvorrichtung 2 ist dabei dicht mit dem Oberteil 7 verbunden, wobei die dazu vorgesehenen Dichtungen nicht näher dargestellt sind. Die an dem Milchbehälter 3 fixierte Schäumvorrichtung 2 ist mit einem Dampfzufuhrkanal 14, einem Lufteinlasskanal 15, einem Milchzufuhrkanal 16 einer Abgabeöffnung 21 sowie einem Entlüftungskanal 22 versehen. Sowohl der Entlüftungskanal 22 wie auch der Lufteinlasskanal 15 münden stirnseitig in die Schäumvorrichtung 2. Der horizontal verlaufende Abschnitt des Milchzufuhrkanals 16 ist mit dem Bezugszeichen 16a versehen. Der Dampfzufuhrkanal 14 bildet endseitig eine Düse 23, welche in eine Unterdruckkammer 24 mündet, die den Milchzufuhrkanal 16 mit einem Mischkanal 25 verbindet. Der in den Lufteinlasskanal 15 eingesetzte Ventileinsatz 8 ist mit einem Rückschlagventil 26 in Form eines Lippenventils versehen.

Auf der Oberseite der Schäumvorrichtung 2 ist die Ventilanordnung 5 angebracht. Die Ventilanordnung 5 umfasst eine Silikonmatte 28, von deren Unterseite zwei Verschlussteile 29, 30 vorstehen, mittels welchen der Luftzufuhrkanal 15 wie auch der Entlüftungskanal 22 an deren Mündungen verschliessbar sind. Auf der Oberseite der Silikonmatte sind zwei korrespondierend zu den Verschlussteilen 29, 30 angeordnete Erhebungen 31, 32 angebracht. Das Öffnen und Schliessen der Ventile erfolgt mittels einer von einem Schrittmotor 34 angetriebenen Nockenwelle 35. Die Nockenwelle 35 ist mit insgesamt drei Nocken 36, 37, 38 versehen, mittels welchen die beiden Verschlussteile 29, 30 der Silikonmatte 28 wie auch ein weiterer, auf der Rückseite der Ventilanordnung 5 angebrachter Verschlusskörper verschiebbar sind. Der Verschlusskörper 40 ist insbesondere aus der Darstellung gemäss Fig. 3 ersichtlich. In der Darstellung gemäss Fig. 2 ist der Entlüftungskanal 22 mittels des zweiten Verschlussteils 30 geschlossen, während der Luftzufuhrkanal 15 über den geöffneten Verschlussteil 29 mit der Umgebungsluft verbunden ist.

Die Schäumvorrichtung 2 ist im weiteren mit einem sich in Richtung des Bodens des Milchbehälters 3 erstreckenden, rüsselartigen Fortsatz 17 versehen, in welchem der Milchzufuhrkanal 16 angeordnet ist und dessen distales Ende eine mit dem Milchzufuhrkanal 16 versehene Einlassöffnung 18 aufweist. Der Fortsatz 17 ist im Bereich der Einlassöffnung 18 beidseitig mit je einer radialen Ausnehmung 19 versehen, welche das Einströmen der Milch von dem Milchbehälter 3 in den Fortsatz 17 begünstigt. Am Eingang des Dampfzufuhrkanals 8 ist eine zylindrische Ausnehmung 44 in die Schäumvorrichtung eingelassen. Die Abgabeöffnung 21 mündet ebenfalls in eine zylindrische Ausnehmung 45.

Das Kupplungselement 4 ist mit zwei zylindrischen Fortsätzen 46, 47 versehen, deren Abstand dem Abstand zwischen den beiden Ausnehmungen 44, 45 entspricht und deren Aussendurchmesser auf den Durchmesser der jeweiligen Ausnehmung 44, 45 abgestimmt ist, um eine dichte Steckverbindung zwischen dem jeweiligen Fortsatz 46, 47 und der entsprechenden Ausnehmung 44, 45 zu ermöglichen. Die beiden zylindrischen Fortsätze 46, 47 stehen über je eine Bohrung 50, 51 mit einem Anschlussstutzen 48, 49 in Verbindung. Dabei dient der obere Anschlussstutzen 48 dem Anschlössen eines zu einer Dampfquelle (nicht dargestellt) führenden Schlauchs, während der untere Anschlussstutzen 49 zum Anschliessen eines zu einem Getränkeauslass (nicht dargestellt) führenden Schlauchs vorgesehen ist.

Die Funktionsweise der Anordnung 1 stellt sich wie folgt dar: Um Milch aufzuschäumen, wird der am Eingang des Lufteinlasskanals 15 angeordnete Verschlussteil 29 geöffnet, während der am Einlass des Entlüftungskanals 22 angeordnete Verschlussteil 30 geschlossen wird. Dieser Zustand ist in der Fig. 2 schematisch dargestellt. Die Betätigung der Verschlussteile 29, 30 erfolgt durch Ansteuerung des Schrittmotors 34, welcher die Nockenwelle 35 in eine Stellung verdreht, in der der jeweilige Nocken 36, 37 die zugehörige Erhebung 31, 32 nach unten drückt. In der gezeigten Drehstellung der Nockenwelle 35 drückt der Nocken 37 die Erhebung 32 nach unten, so dass letztere den Verschlussteil 30 auf die Mündung des Entlüftungskanals 22 drückt und diesen verschliesst. Nun wird über den Dampfzufuhrkanal 14 Dampf zugeführt, der über die Düse 23 in den Mischkanal 25 einströmt und in der Unterdruckkammer 24 einen Unterdruck erzeugt. Dieser Unterdruck führt dazu, dass einerseits über den Fortsatz 17 Milch in den Milchzufuhrkanal 16 eingesaugt wird. Andererseits bewirkt der Unterdruck ein Öffnen des im Lufteinlasskanals 15 angeordneten Rückschlagventils 26, so dass Luft über den Lufteinlasskanal 15 in den horizontal verlaufenden Abschnitt 16a des Milchzufuhrkanals 16 einströmt. Die über den Lufteinlasskanal 15 einströmende Luft vermischt sich mit der durchströmenden Milch. Nach der Düse 23 vermischt sich die Milch mit dem Dampf, welcher letzterer dabei sogleich kondensiert. Durch das Kondensieren des Dampfs wird die Sogwirkung im Bereich der Düse 23 unterstützt. Das Gemisch aus Luft, Milch und Dampf bzw. Wasser strömt in den Mischkanal 25 ein, in welchem ein homogener Milchschaum entsteht, der über die Abgabeöffnung 21 aus der Schäumvorrichtung 2 austritt und über die Bohrung 51 im zylindrischen Fortsatz 47 des Kupplungselements 4 in den Anschlussstutzen 49 einströmt, von wo er über nicht näher dargestellte Mittel zu dem Getränkeauslass strömen kann.

Zum Beenden des Aufschäumvorgangs wird die Zufuhr von Dampf gestoppt, wodurch auch der Druck in der Unterdruckkammer 24 ansteigt und das Rückschlagventil 26 schliesst. Nach dem Aufschäumen von Milch wird der den Entlüftungskanal 22 verschliessende Verschlussteil 30 geöffnet, wodurch die sich noch der Schäumvorrichtung 2 befindliche Milch daraus abfliessen kann. Das Öffnen des Verschlussteils 30 erfolgt wiederum durch Ansteuerung des Schrittmotors 34, der die Nockenwelle 35 in die entsprechende Position verdreht. Durch das Entlüften der Schäumvorrichtung 2 kann gleichzeitig auch verhindert werden, dass in dem Falle, wo der Milchauslauf unterhalb des Milchbehälters 3 angeordnet ist, weiterhin Milch nach dem Prinzip der kommunizierenden Röhren aus dem Milchbehälter 3 abfliesst.

Zum Erwärmen bzw. Erhitzen von Milch, wird sowohl der am Eingang des Lufteinlasskanals 15 angeordnete Verschlussteil 29 wie auch der am Einlass des Entlüftungskanals 22 angeordnete Verschlussteil 30 geschlossen. Danach wird wiederum über den Dampfzufuhrkanal 14 Dampf zugeführt, der über die Düse 23 in den Mischkanal 25 einströmt. Der im Bereich der Düse 23 durch den durchströmenden Dampf bewirkte Unterdruck führt dazu, dass über den Fortsatz 17 Milch in den Milchzufuhrkanal 16 eingesaugt wird, ohne dass jedoch Luft über den Lufteinlasskanal 15 in den horizontal verlaufenden Abschnitt 16a des Milchzufuhrkanals 16 einströmen kann. Auf diese Weise kann Milch schnell und einfach erhitzt werden.

Um ein Entleeren der milchführenden Leitungsteile, Bohrungen und Kanäle 16, 16a, 24, 25, 51 nach dem jeweiligen Schäum- bzw. Erhitzungsvorgang sicherzustellen, wird der am Einlass des Entlüftungskanals 22 angeordnete Verschlussteil 30 nach dem jeweiligen Zubereitungsmodus geöffnet.

Fig. 3 zeigt die Ventilanordnung 5 in einem Querschnitt. Aus dieser Darstellung ist der Verschlusskörper 40 ersichtlich, mittels welchem eine durch einen Stutzen 42 führende Entlüftungsbohrung 41 verschliessbar ist. Am Stutzen 42 ist ein Entlüftungsschlauch (nicht dargestellt) anschliessbar, der mittels einer Kupplung mit einer Getränkeleitung (nicht dargestellt) verbunden ist. Der Verschlusskörper 40 wird mittels eines an der Nockenwelle 35 angeordneten Nockens 38 betätigt.

Vorzugsweise sind sämtliche Kanäle der Schäumvorrichtung mit einer durch Nano-Partikel gebildeten Oberfläche versehen, die sowohl hydrophob wie auch oleophob ist und bei der zumindest einzelne Nano-Partikel zum Mindesten teilweise aus Silber oder Silberverbindungen bestehen. Durch das Vorsehen einer solchen Oberfläche ist die Schäumvorrichtung leicht zu reinigen und besitzt zusätzlich eine antimikrobielle Wirksamkeit. Unter "Nano-Partikel" werden hier Teilchen mit einer Abmessung von10⁻¹⁰ bis 10⁻⁷ m, vorzugsweise von etwa 10⁻⁸ m, verstanden.

Trotz der relativen Schmutzunempfindlichkeit der Anordnung, sollte diese regelmässig gereinigt werden. Dies kann entweder mittels eines Spülprogramms erfolgen, bei welchem zumindest die verschmutzungskritischen Leitungsteile, Bohrungen und Kanäle 16, 21, 24, 25, 45, 51 mit heissem Wasser durchgespült werden. Eine andere Variante besteht darin, das Kupplungselement 4 manuell von der Schäumvorrichtung 2 zu entfernen und die Schäumvorrichtung 2 von dem Milchbehälter 3 abzuheben. Danach kann der Oberteil 7 der Schäumvorrichtung 2 von dem Unterteil 6 abgezogen werden, wodurch die verschmutzungskritischen Innenteile der Schäumvorrichtung 2, insbesondere der horizontale Abschnitt 16 a des Milchzufuhrkanals sowie die Düse 23 und die Unterdruckkammer 24 freigelegt werden. Ebenso kann der Ventileinsatz 9 entfernt werden. Die genannten Bauteile können dann beispielsweise in einem Geschirrspüler gereinigt werden.

## Patentansprüche

1. Anordnung (1) zur Erzeugung von Milchschaum und zum Erhitzen von Milch, mit einer Schäumvorrichtung (2), welche mit einem Dampfzufuhrkanal (14), einem Lufteinlasskanal (15), einem Milchzufuhrkanal (16) sowie einer Abgabeöffnung (21) versehen ist, **dadurch gekennzeichnet, dass** die Schäumvorrichtung (2) einen Entlüftungskanal (22) aufweist, mittels welchem die Schäumvorrichtung (2) nach dem Erzeugen von Milchschaum oder dem Erhitzen von Milch entlüftet werden kann, und dass eine Ventilanordnung (5) vorgesehen ist, mittels welcher der Entlüftungskanal (22) und/oder der Lufteinlasskanal (15) in Abhängigkeit der gewünschten Betriebsart verschliessbar ist.

2. Anordnung (1) nach Anspruch 1, **dadurch gekennzeichnet, dass** die Ventilanordnung (5) mit einem ersten Verschlussteil (29) zum Verschliessen des Lufteinlasskanals (15) und einem zweiten Verschlussteil (30) zum Verschliessen des Entlüftungskanals (22) versehen ist.

3. Anordnung (1) nach Anspruch 1 oder 2, **dadurch gekennzeichnet, dass** die Ventilanordnung (5) mit einem Verschlusskörper (40) zum Verschliessen bzw. Entlüften einer mit einer Getränkeleitung verbundenen Entlüftungsbohrung (41) versehen ist.

4. Anordnung (1) nach einem der vorhergehenden Ansprüche, **dadurch gekennzeichnet, dass** die Ventilanordnung (5) elektromotorisch, elektromagnetisch, hydraulisch oder pneumatisch betätigbar ist.

5. Anordnung (1) nach einem der Ansprüche 2, 3 oder 4, **dadurch gekennzeichnet, dass** die Ventilanordnung (5) einen Schrittmotor (34) und eine mit diesem gekoppelte Nockenwelle (35) aufweist, deren Nocken zum Betätigen der Verschlussteile (29, 30) und/oder des Verschlusskörpers (40) ausgebildet ist.

6. Anordnung (1) nach einem der vorhergehenden Ansprüche, **dadurch gekennzeichnet, dass** sowohl der Entlüftungskanal (22) wie auch der Lufteinlasskanal (15) stirnseitig in die Schäumvorrichtung (2) münden, und dass über den beiden Mündungen eine Silikonmatte (28) angeordnet ist, welche mit zwei Verschlussteilen (29, 30) zum Verschliessen des Entlüftungskanals (22) bzw. des Lufteinlasskanals (15) versehen ist, wobei die beiden Verschlussteile (29, 30) mittels einer elektromotorisch angetriebenen Nockenwelle (35) betätigbar sind.

7. Anordnung (1) nach Anspruch 3, **dadurch gekennzeichnet, dass** der Verschlusskörper (40) mittels einer elektromotorisch angetriebenen Nockenwelle (35) betätigbar.

8. Anordnung (1) nach einem der vorhergehenden Ansprüche, **dadurch gekennzeichnet, dass** der Dampfzufuhrkanal (14) über eine Düse (23) in eine Unterdruckkammer (24) mündet, welche einlassseitig mit dem Milchzufuhrkanal (16a) und auslassseitig mit einem Mischkanal (25) verbunden ist.

9. Anordnung (1) nach einem der vorhergehenden Ansprüche, **dadurch gekennzeichnet, dass** der Entlüftungskanal (22) mit dem Milchzufuhrkanal (16a) verbunden ist.

10. Anordnung (1) nach einem der vorhergehenden Ansprüche, **dadurch gekennzeichnet, dass** im Lufteinlasskanal (15) ein Rückschlagventil (26) angeordnet ist, welches bei geöffnetem erstem Verschlussteil (29) und einem vorbestimmten, durch die Zufuhr von Dampf in einer Unterdruckkammer (24) erzeugten Unterdruck öffnet.

11. Anordnung (1) nach einem der vorhergehenden Ansprüche, **dadurch gekennzeichnet, dass** die Anordnung (1) im weiteren einen Milchbehälter (3) umfasst, an dem die Schäumvorrichtung (2) lösbar fixiert ist.

12. Anordnung (1) nach Anspruch 11, **dadurch gekennzeichnet, dass** die Schäumvorrichtung (2) mit einem sich in Richtung des Bodens des Milchbehälters (3) erstreckenden Fortsatz (17) versehen ist, in welchem der Milchzufuhrkanal (16) angeordnet ist und dessen distales Ende mit einer mit dem Milchzufuhrkanal (16) verbundenen Einlassöffnung (18) versehen ist.

13. Anordnung (1) nach Anspruch 12, **dadurch gekennzeichnet, dass** der Fortsatz (17) im Bereich der Einlassöffnung (18) mit zumindest einer radialen Ausnehmung (19) versehen ist.

14. Anordnung (1) nach einem der vorhergehenden Ansprüche, **dadurch gekennzeichnet, dass** die Schäumvorrichtung (2) mehrteilig ausgebildet ist und die einzelnen Teile (6, 7, 8) mittels einer Steck- oder Schnappverbindung miteinander verbindbar sind.

15. Anordnung (1) nach Anspruch 13, **dadurch gekennzeichnet, dass** der Milchzufuhrkanal (11) nach dem Trennen der einzelnen Teile (6, 7, 8) zumindest teilweise freigelegt ist.

16. Anordnung (1) nach einem der vorhergehenden Ansprüche, **dadurch gekennzeichnet, dass** die Schäumvorrichtung (2) eine erste zylindrische Ausnehmung (44) aufweist, welche mit dem Dampfzufuhrkanal (14) verbunden ist.

17. Anordnung (1) nach einem der vorhergehenden Ansprüche, **dadurch gekennzeichnet, dass** die Schäumvorrichtung (2) eine zweite zylindrische Ausnehmung (45) aufweist, welche mit der Abgabeöffnung (21) verbunden ist oder diese bildet.

18. Anordnung (1) nach Anspruch 16 und 17, **dadurch gekennzeichnet, dass** die Schäumvorrichtung (2) ein Kupplungselement (4) aufweist, welches mit zwei zylindrischen Fortsätzen (46, 47) versehen ist, welche zum Ankuppeln an die erste und zweite zylindrische Ausnehmung (45, 46) ausgebildet sind, wobei am einen Fortsatz (46) eine Dampfzufuhrleitung anschliessbar ist und wobei am weiteren Fortsatz (47) eine Abgabeleitung anschliessbar ist.

19. Anordnung (1) nach einem der vorhergehenden Ansprüche, **dadurch gekennzeichnet, dass** zumindest der Dampfzufuhrkanal (14), der Lufteinlasskanal (15), der Milchzufuhrkanal (16), die Düse (23) und die Unterdruckkammer (24) der Schäumvorrichtung (2) mit einer durch Nano-Partikel gebildeten hydrophoben und oleophoben Oberfläche versehen ist, deren Nano-Partikel zum Mindesten teilweise aus Silber oder Silberverbindungen bestehen.

20. Anordnung (1) nach einem der vorhergehenden Ansprüche, **dadurch gekennzeichnet, dass** sie zusammen mit einer Espressokaffeemaschine verwendet wird oder dass sie in einer Espressokaffeemaschine zum Einsatz kommt.

21. Espressokaffeemaschine mit einer nach einem der Ansprüche 1 bis 19 ausgebildeten Anordnung (1).

## Claims

1. Arrangement (1) for producing milk froth and for heating milk, comprising a frothing apparatus (2) which is provided with a steam supply duct (14), an air inlet duct (15), a milk supply duct (16) and a discharge opening (21), **characterized in that** the frothing apparatus (2) has a ventilation duct (22) by means of which the frothing apparatus (2) can be ventilated after milk froth is produced or milk is heated, and **in that** a valve arrangement (5) is provided, by means of which the ventilation duct (22) and/or the air inlet duct (15) can be closed as a function of the desired mode of operation.

2. Arrangement (1) according to Claim 1, **characterized in that** the valve arrangement (5) is provided with a first closure part (29) for closing the air inlet duct (15) and with a second closure part (30) for closing the ventilation duct (22).

3. Arrangement (1) according to Claim 1 or 2, **characterized in that** the valve arrangement (5) is provided with a closure body (40) for closing or ventilating a ventilation hole (41) which is connected to a beverage line.

4. Arrangement (1) according to one of the preceding claims, **characterized in that** the valve arrangement (5) can be operated in an electromotive, electromagnetic, hydraulic or pneumatic manner.

5. Arrangement (1) according to one of Claims 2, 3 and 4, **characterized in that** the valve arrangement (5) has a stepper motor (34) and a camshaft (35) which is coupled to the said stepper motor, the cam of the said camshaft being designed to operate the closure parts (29, 30) and/or the closure body (40).

6. Arrangement (1) according to one of the preceding claims, **characterized in that** the front ends of both the ventilation duct (22) and also the air inlet duct (15) issue into the frothing apparatus (2), and **in that** a silicone mat (28) is arranged over the two ports and is provided with two closure parts (29, 30) for closing the ventilation duct (22) and, respectively, the air inlet duct (15), it being possible to operate the two closure parts (29, 30) by means of a camshaft (35) which is driven by electric motor.

7. Arrangement (1) according to Claim 3, **characterized in that** the closure body (40) can be operated by means of a camshaft (35) which is driven by electric motor.

8. Arrangement (1) according to one of the preceding claims, **characterized in that** the steam supply duct (14) issues via a nozzle (23) into a negative pressure chamber (24) which is connected to the milk supply duct (16a) at the inlet end and is connected to a mixing duct (25) at the outlet end.

9. Arrangement (1) according to one of the preceding claims, **characterized in that** the ventilation duct (22) is connected to the milk supply duct (16a).

10. Arrangement (1) according to one of the preceding claims, **characterized in that** a non-return valve (26) is arranged in the air inlet duct (15) and opens when the first closure part (29) is open and there is a predetermined negative pressure which is generated by the supply of steam in a negative pressure chamber (24).

11. Arrangement (1) according to one of the preceding claims, **characterized in that** the arrangement (1) also comprises a milk container (3) to which the frothing apparatus (2) is detachably fixed.

12. Arrangement (1) according to Claim 11, **characterized in that** the frothing apparatus (2) is provided with a projection (17) which extends in the direction of the base of the milk container (3), in which the milk supply duct (16) is arranged and whose distal end is provided with an inlet opening (18) which is connected to the milk supply duct (16).

13. Arrangement according to Claim 12, **characterized in that** the projection (17) is provided with at least one radial recess (19) in the region of the inlet opening (18).

14. Arrangement (1) according to one of the preceding claims, **characterized in that** the frothing apparatus (2) is formed from a plurality of parts and the individual parts (6, 7, 8) can be connected to one another by means of a plug or snap-action connection.

15. Arrangement (1) according to Claim 13, **characterized in that** the milk supply duct (11) is at least partially exposed after the individual parts (6, 7, 8) are separated.

16. Arrangement (1) according to one of the preceding claims, **characterized in that** the frothing apparatus (2) has a first cylindrical recess (44) which is connected to the steam supply duct (14).

17. Arrangement (1) according to one of the preceding claims, **characterized in that** the frothing apparatus (2) has a second cylindrical recess (45) which is connected to or forms the discharge opening (21).

18. Arrangement (1) according to Claims 16 and 17, **characterized in that** the frothing apparatus (2) has a coupling element (4) which is provided with two cylindrical projections (46, 47) which are designed to be coupled to the first and second cylindrical recesses (45, 46), it being possible to connect a steam supply line to one projection (46), and it being possible to connect a discharge line to the other projection (47).

19. Arrangement (1) according to one of the preceding claims, **characterized in that** at least the steam supply duct (14), the air inlet duct (15), the milk supply duct (16), the nozzle (23) and the negative pressure chamber (24) of the frothing apparatus (2) are provided with a hydrophobic and oleophobic surface which is formed by nanoparticles and whose nanoparticles at least partly comprise silver or silver compounds.

20. Arrangement (1) according to one of the preceding claims, **characterized in that** it is used together with an espresso coffee machine, or **in that** it is employed in an espresso coffee machine.

21. Espresso coffee machine having an arrangement (1) which is formed according to one of Claims 1 to 19.

## Revendications

1. Dispositif (1) pour produire de la mousse de lait et pour chauffer du lait, comprenant un dispositif de moussage (2) qui est muni d'un conduit d'amenée de vapeur (14), d'un conduit d'admission d'air (15), d'un conduit d'alimentation en lait (16), ainsi que d'une ouverture de sortie (21), **caractérisé en ce que** le dispositif de moussage (2) présente un conduit d'aération (22), au moyen duquel le dispositif de moussage (2) peut être aéré après la production de mousse de lait ou le chauffage de lait, et **en ce qu'**il est prévu un dispositif à soupape (5), au moyen duquel le conduit d'aération (22) et/ou le conduit d'admission d'air (15) peut (peuvent) être fermé(s) en fonction du mode de fonctionnement souhaité.

2. Dispositif (1) selon la revendication 1, **caractérisé en ce que** le dispositif à soupape (5) est muni d'une première pièce de fermeture (29) pour fermer le conduit d'admission d'air (15) et d'une deuxième pièce de fermeture (30) pour fermer le conduit d'aération (22).

3. Dispositif (1) selon la revendication 1 ou 2, **caractérisé en ce que** le dispositif à soupape (5) est muni d'un corps de fermeture (40) pour fermer, respectivement aérer, un orifice d'aération (41) relié à une conduite de boisson.

4. Dispositif (1) selon l'une quelconque des revendications précédentes, **caractérisé en ce que** le dispositif à soupape (5) peut être actionné par moteur électrique, par dispositif électromagnétique, hydraulique ou pneumatique.

5. Dispositif (1) selon l'une quelconque des revendication 2, 3 ou 4, **caractérisé en ce que** le dispositif à soupape (5) présente un moteur pas à pas (34) et une arbre à came (35) couplé à celui-ci, dont la came est formée pour actionner les pièces de fermeture (29, 30) et/ou le corps de fermeture (40).

6. Dispositif (1) selon l'une quelconque des revendications précédentes, **caractérisé en ce que** le conduit d'aération (22), ainsi que le conduit d'admission d'air (15) débouchent du côté frontal dans le dispositif de moussage (2) et **en ce que**, au-dessus des deux embouchures, est disposé un matelas en silicone (28) qui est muni de deux pièces de fermeture (29, 30) pour fermer le conduit d'aération (22), respectivement le conduit d'admission d'air (15), les deux pièces de fermeture (29, 30) pouvant être actionnées au moyen d'un arbre à came (35) entraîné par un moteur électrique.

7. Dispositif (1) selon la revendication 3, **caractérisé en ce que** le corps de fermeture (40) peut être actionné au moyen d'un arbre à came (35) entraîné par un moteur électrique.

8. Dispositif (1) selon l'une quelconque des revendications précédentes, **caractérisé en ce que** le conduit d'amenée de vapeur (14) débouche par l'intermédiaire d'une buse (23) dans une chambre à dépression (24) qui est reliée du côté entrée au conduit d'alimentation en lait (16a) et du côté sortie à un conduit de mélange (25)

9. Dispositif (1) selon l'une quelconque des revendications précédentes, **caractérisé en ce que** le conduit d'aération (22) est relié au conduit d'alimentation en lait (16a).

10. Dispositif (1) selon l'une quelconque des revendications précédentes, **caractérisé en ce qu'**un clapet anti-retour (26) disposé dans le conduit d'admission d'air (15) s'ouvre lorsque la première pièce de fermeture (29) est ouverte et qu'une dépression prédéterminée, produite dans une chambre à dépression (24) par l'amenée de vapeur est obtenue.

11. Dispositif (1) selon l'une quelconque des revendications précédentes, **caractérisé en ce que** le dispositif (1) comprend en outre un réservoir de lait (3) sur lequel le dispositif de moussage (2) est fixé de manière séparable.

12. Dispositif (1) selon la revendication 11, **caractérisé en ce que** le dispositif de moussage (2) est muni d'un prolongement (17) s'étendant en direction du fond du réservoir de lait (3), dans lequel est disposé le conduit d'alimentation en lait (16) et dont l'extrémité distale est munie d'une ouverture d'entrée (18) reliée au conduit d'alimentation en lait (16).

13. Dispositif (1) selon la revendication 12, **caractérisé en ce que** le prolongement (17) est muni, dans la zone de l'ouverture d'entrée (18), d'un moins un évidement radial (19).

14. Dispositif (1) selon l'une quelconque des revendications précédentes, **caractérisé en ce que** le dispositif de moussage (2) est réalisé en plusieurs pièces et que les différentes pièces (6, 7, 8) peuvent être reliées entre elles au moyen d'un assemblage par emboîtement ou encliquetage.

15. Dispositif (1) selon la revendication 13, **caractérisé en ce que** le conduit d'alimentation en lait (11) est dégagé au moins en partie après la séparation des différentes pièces (6, 7, 8).

16. Dispositif (1) selon l'une quelconque des revendications précédentes, **caractérisé en ce que** le dispositif de moussage (2) présente un premier évidement cylindrique (44) qui est relié au conduit d'amenée de vapeur (14).

17. Dispositif (1) selon l'une quelconque des revendications précédentes, **caractérisé en ce que** le dispositif de moussage (2) présente un deuxième évidement cylindrique (45) qui est relié à l'ouverture de sortie (21) ou forme celle-ci.

18. Dispositif (1) selon les revendications 16 et 17, **caractérisé en ce que** le dispositif de moussage (2) présente un élément de couplage (4) qui est muni de deux prolongements cylindriques (46, 47) qui sont réalisés pour le couplage au premier et au deuxième évidements cylindriques (45, 46), une conduite d'amenée de vapeur pouvant être raccordée à un prolongement (46) et une conduite de sortie pouvant être raccordée à l'autre prolongement (47).

19. Dispositif (1) selon l'une quelconque des revendications précédentes, **caractérisé en ce que** au moins le conduit d'amenée de vapeur (14), le conduit d'admission d'air (15), le conduit d'alimentation en lait (16), la buse (23) et la chambre à dépression (24) du dispositif de moussage (2) sont munis d'une surface hydrophobe et oléophobe formée par des nanoparticules, dont les nanoparticules sont constituées au moins en partie d'argent ou de combinaisons d'argent.

20. Dispositif (1) selon l'une quelconque des revendications précédentes, **caractérisé en ce qu'**il est employé conjointement avec une machine à café expresso ou est utilisé dans une machine à café expresso.

21. Machine à café expresso avec un dispositif (1) réalisé selon l'une quelconque des revendications 1 à 19.
